# EUROPEAN PATENT SPECIFICATION

(11) **EP 4 207 819 B1**
(45) Date of publication and mention of the grant of the patent: **25.03.2026**
(21) Application number: 20955532.5
(22) Date of filing: 29.09.2020
(51) Int. Cl.: H04W 76/27, H04L 67/303, H04W 64/00, H04L 5/00, H04W 4/02, H04W 88/18

(54) **COMMUNICATION METHOD AND APPARATUS**
KOMMUNIKATIONSVERFAHREN UND -VORRICHTUNG
PROCÉDÉ ET APPAREIL DE COMMUNICATION

(43) Date of publication of application: 05.07.2023
(73) Proprietor: Huawei Technologies Co., Ltd., Shenzhen, Guangdong 518129 (CN)
(72) Inventor: HAO, Jinping, Shenzhen, Guangdong 518129 (CN); JIN, Yinghao, Shenzhen, Guangdong 518129 (CN); HUANG, Su, Shenzhen, Guangdong 518129 (CN)
(74) Representative: Epping - Hermann - Fischer
(86) International application number: PCT/CN2020/118822
(87) International publication number: WO 2022/067505

(56) References cited:
- WO-A1-2019/160343
- WO-A1-2020/140668
- WO-A1-2020/146739
- CN-A- 110 858 951
- CN-A- 111 343 567
- CN-A- 111 586 855
- US-A1- 2017 264 465
- US-A1- 2021 337 501
- ERICSSON: "SRS for positioning during DRX inactive time", 3GPP DRAFT; R4-2011249, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Electronic Meeting; 20200817 - 20200828, 7 August 2020 (2020-08-07), Mobile Competence Centre ; 650, route des Lucioles ; F-06921 Sophia-Antipolis Cedex ; France , XP051914060

## Description

### TECHNICAL FIELD

Embodiments of this application relate to the field of communication technologies, and in particular, to a communication method, apparatus, and system.

### BACKGROUND

In a communication system, a terminal device may be positioned via a location technology. A current uplink location technology can only position a terminal device in a connected state, but cannot position a terminal device in a non-connected state.

WO 2020/140668 A1 discloses a method and device for uplink positioning in an unconnected state. The method comprises: receiving first configuration information, the first configuration information being used for indicating a first uplink positioning resource when a terminal device is in an unconnected state; and if entering the unconnected state, then transmitting a first uplink positioning signal via the first uplink positioning resource to allow a positioning server to determining the location of the terminal device on the basis of measurement information of the first uplink positioning signal.

WO 2019/160343 A1 discloses a method and apparatus for performing an uplink (UL) transmission with pre-allocated beams in a wireless communication system. A user equipment (UE) receives a connection release message from a network in a first state. The connection release message includes information on a pre-allocated UL resource for UL transmission with pre-allocated beams. The UE enters a second state from the first state, selects a cell, and performs the UL transmission to the cell in the second state via the pre-allocated beams based on the pre-configured UL resource for UL transmission when a data is available for transmission. The first state may be a radio resource control (RRC) connected state, and the second state may be an RRC inactive state and/or an RRC idle state.

### SUMMARY

The invention is defined in the claims. In the following, parts of the description and drawings referring to embodiments which are not covered by the claims are not presented as embodiments of the invention, but as examples useful for understanding the invention.

Embodiments of this application provide a communication method, apparatus, and system, to position a terminal device in a non-connected state.

To achieve the foregoing objectives, the following technical solutions are used in embodiments of this application.

According to a first aspect, an embodiment of this application provides a communication method. The method includes: A terminal device sends capability information to a location management function LMF device, where the capability information indicates that the terminal device supports sending of a sounding reference signal SRS in a non-connected state. The terminal device receives information about an SRS configuration from an access network device, where the information about the SRS configuration indicates the terminal device to send an SRS based on the SRS configuration. The terminal device sends, to the location management function LMF device, the capability information indicating that the terminal device supports sending of the sounding reference signal SRS in the non-connected state. In this way, the LMF device may learn that the terminal device supports sending of the SRS in the non-connected state, so that positioning in the non-connected state may be configured for the terminal device. This avoids a positioning failure caused by positioning the terminal device when the terminal device does not support sending of the SRS in the non-connected state. The method makes it possible to position the terminal device in the non-connected state. Further, the LMF device learns that the terminal device supports uplink positioning in the non-connected state, so that the terminal device does not need to be paged to a connected state each time during positioning. This avoids a delay and signaling overheads caused by paging the terminal device to the connected state, and reduces energy consumption.

In a possible implementation, the method further includes: The terminal device receives a first request from the LMF device, where the first request is for requesting the terminal device to send the capability information.

The terminal device may send the capability information based on the first request of the LMF device. In this way, the LMF device may obtain a capability of the terminal device in a timely manner based on a requirement of the LMF device, so that positioning in the non-connected state may be configured for the terminal device. This avoids a positioning failure caused by positioning the terminal device when the terminal device does not support sending of the SRS in the non-connected state. In addition, signaling overheads caused when the terminal device keeps sending the capability information are avoided.

In a possible implementation, the non-connected state includes an inactive state. In this way, the LMF device may learn that the terminal device supports sending of the SRS in the inactive state, so that positioning in the inactive state may be configured for the terminal device.

In a possible implementation, the non-connected state includes an idle state. In this way, the LMF device may learn that the terminal device supports sending of the SRS in the idle state, so that positioning in the idle state may be configured for the terminal device.

The information about the SRS configuration is received via a radio resource control release RRC release message.

In one aspect, the information about the SRS configuration is received via the radio resource control release message, so that the terminal device sends the SRS in the non-connected state. This avoids a positioning failure caused when the terminal device stops sending the SRS after the serving access network device releases the terminal device to the non-connected state because the terminal device does not have a data service. In addition, the terminal device does not need to be restored to the connected state to send the SRS for positioning. This saves signaling overheads, and reduces energy consumption of the terminal device. In another aspect, the information about the SRS configuration is sent via the radio resource control release message, which may implicitly indicate the terminal device to send the SRS in the non-connected state, so that the terminal device does not need to be notified via a separate message. This saves signaling overheads, and reduces air interface overheads.

In a possible implementation, the method further includes: The terminal device receives, from the access network device, information indicating the terminal device to send the SRS in the non-connected state based on the SRS configuration.

The terminal device receives the information indicating the terminal device to send the SRS in the non-connected state based on the SRS configuration, so that the terminal device sends the SRS based on the SRS configuration after entering the non-connected state. This avoids a positioning failure caused when the terminal device stops sending the SRS after the serving access network device releases the terminal device to the non-connected state because the terminal device does not have a data service.

In a possible implementation, the capability information includes a method, for performing positioning in the non-connected state, supported by the terminal device. The capability information includes the method, for performing positioning in the non-connected state, supported by the terminal device, so that the LMF device can learn of a positioning method supported by the UE. Therefore, when selecting the positioning method, the LMF may correspondingly determine the positioning method.

According to a second aspect, this application provides a communication method. The method includes: A location management function LMF device receives capability information from a terminal device, where the capability information indicates that the terminal device supports sending of a sounding reference signal SRS in a non-connected state. The LMF device sends, to an access network device, a message for requesting the access network device to configure the terminal device to send the SRS.

The LMF device receives the capability information indicating that the terminal device supports sending of the sounding reference signal SRS in the non-connected state. In this way, the LMF device may learn that the terminal device supports sending of the SRS in the non-connected state, so that positioning in the non-connected state may be configured for the terminal device. This avoids a positioning failure caused by positioning the terminal device when the terminal device does not support sending of the SRS in the non-connected state. The method makes it possible to position the terminal device in the non-connected state. Further, the LMF device learns that the terminal device supports uplink positioning in the non-connected state, so that the terminal device does not need to be paged to a connected state each time during positioning. This avoids a delay and signaling overheads caused by paging the terminal device to the connected state, and reduces energy consumption.

In a possible implementation, the message for requesting the access network device to configure the terminal device to send the SRS includes information for requesting the access network device to configure the terminal device to send the SRS in the non-connected state.

The message sent by the LMF device to the access network device includes information for requesting the access network device to configure the terminal device to send the SRS in the non-connected state. The access network device may configure, based on a requirement, the terminal device to send the SRS in the non-connected state, to avoid keeping the terminal device in the connected state to send the SRS. This reduces energy consumption of the terminal device.

In a possible implementation, the LMF device sends, to the access network device, information indicating that the terminal device supports sending of the SRS in the non-connected state. The message sent by the LMF device to the access network device includes information indicating that the terminal device supports sending of the SRS in the non-connected state. The access network device may configure, based on a requirement, the terminal device to send the SRS in the non-connected state, to avoid keeping the terminal device in the connected state to send the SRS. This reduces energy consumption of the terminal device.

In a possible implementation, the LMF device receives, from the access network device, information indicating that the terminal device enters the non-connected state.

The LMF device receives, from the access network device, the information indicating that the terminal device enters the non-connected state, so that the LMF device can learn that the terminal device enters the non-connected state. In one aspect, the LMF device may select a measurement access network device with reference to the message, to ensure that plenty of measurement results are obtained, and ensure positioning accuracy of the terminal device. For example, to avoid movement of the terminal device, a base station in a wider range may be selected for measurement. In another aspect, the LMF device may notify the RAN device that the terminal device supports sending of the SRS in the non-connected state. This avoids a delay and signaling overheads caused when the access network device needs to page the terminal device to the connected state during positioning, and reduces energy consumption.

In a possible implementation, the LMF device receives, from the access network device, information about an area in which the terminal device is located.

The LMF device receives, from the access network device, the information about the area in which the terminal device is located, so that the LMF device may obtain the information about the area in which the terminal device is located. The LMF device may select a measurement base station with reference to the message, to ensure that a proper measurement base station is selected and sufficient measurement results are obtained, and ensure positioning accuracy of the UE.

According to a third aspect, this application provides a communication method. The method includes: An access network device receives capability information sent by a terminal device, where the capability information indicates that the terminal device supports sending of a sounding reference signal SRS in a non-connected state. The access network device sends the capability information to a location management function LMF device.

The access network device receives the capability information, sent by the terminal device, indicating that the terminal device supports sending of the sounding reference signal SRS in the non-connected state, and sends the capability information to the LMF device. In this way, the LMF device may learn that the terminal device supports sending of the SRS in the non-connected state, so that positioning in the non-connected state may be configured for the terminal device. This avoids a positioning failure caused by positioning the terminal device when the terminal device does not support sending of the SRS in the non-connected state. The method makes it possible to position the terminal device in the non-connected state. Further, the LMF device learns that the terminal device supports uplink positioning in the non-connected state, so that the terminal device does not need to be paged to a connected state each time during positioning. This avoids a delay and signaling overheads caused by paging the terminal device to the connected state, and reduces energy consumption.

In a possible implementation, the method further includes: The access network device receives a first request from the LMF device, where the first request is for requesting the terminal device to send the capability information. The access network device sends the first request to the terminal device.

In a possible implementation, the method further includes: The access network device sends information about an SRS configuration to the terminal device, where the information about the SRS configuration indicates the terminal device to send the SRS based on the SRS configuration.

In a possible implementation, the method further includes: The access network device sends, to the terminal device, information indicating the terminal device to send the SRS in the non-connected state based on the SRS configuration. The information about the SRS configuration sent to the terminal device is sent via a radio resource control release RRC release message.

In a possible implementation, the method further includes: The access network device receives a second request from the LMF device, where the second request is for requesting the access network device to configure the terminal device to send the SRS.

In a possible implementation, the second request is for requesting the access network device to configure the terminal device to send the SRS in the non-connected state.

In a possible implementation, the second request includes information indicating the access network device to configure the terminal device to send the SRS in the non-connected state

In a possible implementation, the second request includes information indicating that the terminal device supports sending of the SRS in the non-connected state.

In a possible implementation, the method further includes: The access network device determines to configure the terminal device to send the SRS in the non-connected state.

When the terminal device meets a specific condition, the access network device releases the terminal to the non-connected state to send the SRS. For example, when the terminal device has no data service for a period of time, the access network device releases the terminal device to the non-connected state to send the SRS. This prevents the terminal device from being in the connected state, thereby reducing energy consumption of the terminal device.

In a possible implementation, the method further includes: The access network device sends, to the LMF device, information about an area in which the terminal device is located.

In a possible implementation, the method further includes: The access network device sends, to the LMF device, information indicating that the terminal device enters the non-connected state.

According to a fourth aspect, this application provides a communication apparatus. The communication apparatus includes: a sending unit, configured to send capability information to a location management function LMF device, where the capability information indicates that the terminal device supports sending of a sounding reference signal SRS in a non-connected state; and a receiving unit, configured to receive information about an SRS configuration from an access network device, where the information about the SRS configuration indicates the terminal device to send the SRS based on the SRS configuration.

In a possible implementation, the receiving unit is further configured to receive a first request from the LMF device, where the first request is for requesting the terminal device to send the capability information.

In a possible implementation, the non-connected state includes an idle state and/or an inactive state.

The information about the SRS configuration is received via a radio resource control release RRC release message.

In a possible implementation, the receiving unit is further configured to receive, from the access network device, information indicating the terminal device to send the SRS in the non-connected state based on the SRS configuration. In a possible implementation, the SRS configuration includes at least one of the following: an SRS sending periodicity, an SRS resource indicator, or a quantity of SRS symbols.

In a possible implementation, the capability information includes a method, for performing positioning in the non-connected state, supported by the terminal device.

In a possible implementation, the communication apparatus is a terminal device, a chip in the terminal device, or a system on chip (system on chip) in the terminal device.

According to a fifth aspect, this application provides a communication apparatus. The communication apparatus includes: a receiving unit, configured to receive capability information from a terminal device, where the capability information indicates that the terminal device supports sending of a sounding reference signal SRS in a non-connected state; and a sending unit, configured to send, to an access network device, a message for requesting the access network device to configure the terminal device to send the SRS.

In a possible implementation, the message for requesting the access network device to configure the terminal device to send the SRS includes information for requesting the access network device to configure the terminal device to send the SRS in the non-connected state.

In a possible implementation, the sending unit is further configured to send, to the access network device, information indicating that the terminal device supports sending of the SRS in the non-connected state.

In a possible implementation, the receiving unit is further configured to receive, from the access network device, information indicating that the terminal device enters the non-connected state.

In a possible implementation, the receiving unit is further configured to receive, from the access network device, information about an area in which the terminal device is located.

In a possible implementation, the communication apparatus is a core network device, for example, an LMF device; or may be a chip, a system on chip, or a circuit in the core network device.

According to a sixth aspect, this application provides a communication apparatus. The communication apparatus includes: a receiving unit, configured to receive capability information sent by a terminal device, where the capability information indicates that the terminal device supports sending of a sounding reference signal SRS in a non-connected state; and a sending unit, configured to send the capability information to a location management function LMF device. In a possible implementation, the receiving unit is further configured to receive a first request from the LMF device, where the first request is for requesting the terminal device to send the capability information. The access network device sends the first request to the terminal device.

In a possible implementation, the sending unit is further configured to send information about an SRS configuration to the terminal device, where the information about the SRS configuration indicates the terminal device to send the SRS based on the SRS configuration.

In a possible implementation, the sending unit is further configured to send, to the terminal device, information indicating the terminal device to send the SRS in the non-connected state based on the SRS configuration.

The information about the SRS configuration sent to the terminal device is sent via a radio resource control release RRC release message.

In a possible implementation, the receiving unit is further configured to receive a second request from the LMF device, where the second request is for requesting the access network device to configure the terminal device to send the SRS. In a possible implementation, the second request is for requesting the access network device to configure the terminal device to send the SRS in the non-connected state.

In a possible implementation, the second request includes information indicating the access network device to configure the terminal device to send the SRS in the non-connected state

In a possible implementation, the second request includes information indicating that the terminal device supports sending of the SRS in the non-connected state.

In a possible implementation, the apparatus further includes a processing unit, configured to determine to configure the terminal device to send the SRS in the non-connected state.

In a possible implementation, the sending unit is further configured to send, to the LMF device, information about an area in which the terminal device is located.

In a possible implementation, the sending unit is further configured to send, to the LMF device, information indicating that the terminal device enters the non-connected state.

In a possible implementation, the communication apparatus is an access network device, or a chip, a system on chip, or a circuit in the access network device.

According to a seventh aspect, this application provides a communication apparatus, including a processor and a transceiver. The processor and the transceiver are configured to support the communication apparatus in performing the communication method according to any one of the first aspect, the second aspect, and the third aspect or the possible implementations of the first aspect, the second aspect, and the third aspect.

In a possible implementation, when the communication apparatus performs the communication method according to any one of the first aspect or the possible implementations of the first aspect, the communication apparatus is a terminal device, a chip in the terminal device, or a system on chip in the terminal device.

In a possible implementation, when the communication apparatus performs the communication method according to any one of the second aspect or the possible implementations of the second aspect, the communication apparatus is a core network device, for example, an LMF device; or may be a chip, a system on chip, or a circuit in the core network device.

In a possible implementation, when the communication apparatus performs the communication method according to any one of the third aspect or the possible implementations of the third aspect, the communication apparatus is an access network device, or a chip, a system on chip, or a circuit in the access network device.

According to an eighth aspect, this application provides a computer-readable storage medium. The computer-readable storage medium stores computer instructions. When the computer instructions are run, the communication method according to any one of the first aspect, the second aspect, and the third aspect or the possible implementations of the first aspect, the second aspect, and the third aspect is performed.

According to a ninth aspect, this application provides a communication apparatus, including a processor and a memory. The memory is configured to store computer-executable instructions. When the communication apparatus runs, the processor executes the computer-executable instructions stored in the memory, to enable the communication apparatus to perform the communication method according to any one of the first aspect, the second aspect, and the third aspect or the possible implementations of the first aspect, the second aspect, and the third aspect.

According to a tenth aspect, this application provides a computer program product including instructions. When the computer program product runs on a computer, the computer is enabled to perform the communication method according to any one of the first aspect, the second aspect, and the third aspect or the possible implementations of the first aspect, the second aspect, and the third aspect.

According to an eleventh aspect, this application provides a communication system. The communication system may include the communication apparatus according to any one of the second aspect or the possible implementations of the second aspect and the communication apparatus according to any one of the third aspect or the possible implementations of the third aspect.

### BRIEF DESCRIPTION OF DRAWINGS

FIG. 1 is a schematic diagram of a system architecture according to an embodiment of this application;
FIG. 2 is a flowchart of a communication method according to an embodiment of this application;
FIG. 3 is a schematic diagram of a positioning method according to an embodiment of this application;
FIG. 4 is a flowchart of a communication method according to an embodiment of this application;
FIG. 5 is a flowchart of another communication method according to an embodiment of this application;
FIG. 6 is a schematic diagram of a structure of a communication apparatus according to an embodiment of this application;
FIG. 7 is a schematic diagram of a structure of a communication apparatus according to an embodiment of this application;
FIG. 8 is a schematic diagram of a structure of a communication apparatus according to an embodiment of this application; and
FIG. 9 is a schematic diagram of a structure of a communication apparatus according to an embodiment of this application.

### DESCRIPTION OF EMBODIMENTS

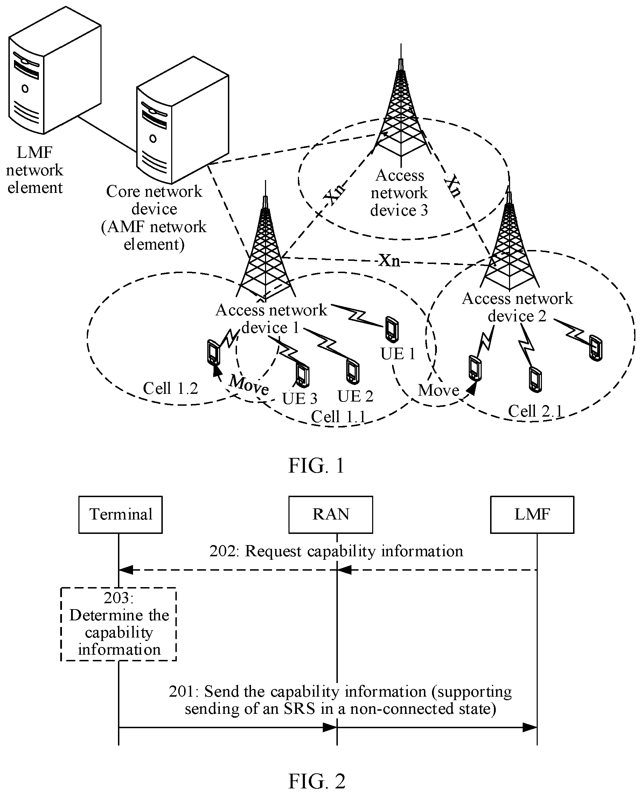

FIG. 1 is a schematic diagram of a communication system according to an embodiment of this application. As shown in FIG. 1, the communication system may include an access network device, a terminal device, and a core network device. The core network device includes an access management function (Access Management Function, AMF) device and a location management function (Location Management Function LMF) device.

Access network devices communicate with each other in a wired or wireless manner, for example, communicate with each other through an Xn interface in FIG. 1. The access network device and the core network device communicate with each other in a wired or wireless manner, for example, communicate with each other through a next generation (next generation, NG) interface.

The access network device may cover one or more cells. For example, an access network device 1 covers a cell 1.1 and a cell 1.2, and an access network device 2 covers a cell 2.1. The terminal device may camp on the access network device in one of the cells, and is in a connected state. The terminal device may switch from the connected state to a non-connected state by using a radio resource management (radio resource control, RRC) release process, for example, switch to an inactive state. The terminal device in the non-connected state may camp on an original cell, and perform uplink transmission and/or downlink transmission with an access network device in the original cell based on a transmission parameter of the terminal device in the original cell. The terminal device in the non-connected state may alternatively move to a new cell, and perform uplink transmission and/or downlink transmission with an access network device in the new cell based on a transmission parameter of the terminal device in the new cell.

The access network device is mainly configured to implement at least one of the following functions: scheduling resource, radio resource management, and radio resource control of the terminal device. Specifically, the access network device may include a base station, a wireless access point, a transmission reception point (transmission receive point, TRP), a transmission point (transmission point, TP), a central unit (central unit, CU), a distributed unit (distributed unit, DU), and another access node. In this embodiment of this application, an apparatus configured to implement a function of the access network device may be an access network device, or may be an apparatus that can support the access network device in implementing the function, for example, a chip system. The apparatus may be installed in the access network device, or may be used together with the access network device. In the technical solutions provided in embodiments of this application, the technical solutions provided in embodiments of this application are described by using an example in which the apparatus configured to implement the function of the access network device is the access network device.

The terminal device (terminal equipment) may be user equipment (user equipment, UE), a mobile station (mobile station, MS), a mobile terminal (mobile terminal, MT), or the like. Specifically, the terminal device may be a mobile phone (mobile phone), a tablet computer, or a computer with a wireless transceiver function, or may be a virtual reality (virtual reality, VR) terminal device, augmented reality (augmented reality, AR) terminal device, a wireless terminal device in industrial control, a wireless terminal device in self-driving, a wireless terminal device in telemedicine, a wireless terminal device in a smart grid, a wireless terminal device in a smart city (smart city), a smart home, or a vehicle-mounted terminal device, or a terminal device in the Internet of Everything. In embodiments of this application, an apparatus configured to implement a function of the terminal device may be a terminal device, or may be an apparatus that can support the terminal device in implementing the function, for example, a chip system. The apparatus may be installed in a terminal device, or may be used together with the terminal device. In the following descriptions, a terminal device is referred as a terminal device for short, to describe the communication method provided in embodiments of this application.

An AMF device is mainly responsible for access authentication and mobility management of the terminal device, such as management of a registration status of a user, a connection status of a user, user registration and network access, tracking area update, user authentication during cell handover.

An LMF network element is mainly responsible for providing positioning services for the terminal device and other devices.

It should be noted that FIG. 1 is an example framework diagram. A quantity of network devices, a quantity of cells, a quantity of terminal devices, and a state of a terminal device that are included in FIG. 1 are not limited. In addition to the devices shown in FIG. 1, the communication system may further include another device.

The following describes some technical terms used in embodiments of this application.

The connected (connected) state may be referred to as an RRC_connected state. In the connected state, there is an RRC connection between the terminal device and the access network device, and there is a non-access stratum (non-access stratum, NAS) signaling connection between the terminal device and the core network device (for example, a mobility management network element). In the RRC_connected state, the access network device and the core network device each store a context of the terminal device.

The non-connected state indicates that the terminal device is not in the connected state. The non-connected state includes an idle (idle) state and/or an inactive (inactive) state.

The inactive (inactive) state may be referred to as an RRC_inactive state. In the inactive state, there is no RRC connection between the terminal device and the access network device. The access network device stores a context of the terminal device, and the core network device may store a context of the terminal device. The access network device does not know a specific cell on which the terminal device camps within coverage of the access network device or whether the terminal device is within a management range of the access network device, and the core network device knows a specific access network device through which the terminal device can be found.

The idle (idle) state may be referred to as an RRC_idle state. In the idle state, there is no RRC connection between the terminal device and the access network device, the access network device does not store the context of the terminal device, and there is no NAS signaling connection between the terminal device and the core network device (for example, the mobility management network element).

For the connected state, the non-connected state, the inactive state, and the idle state, refer to the 3GPP standard.

A current uplink location technology can only position a terminal device in a connected state, but cannot position a terminal device in a non-connected state. For the terminal device in the non-connected state, a network needs to first page the terminal device to the connected state, and then the LMF device performs uplink positioning on the terminal device. Paging causes a waste of energy consumption of the terminal device, and prolongs a positioning time.

This application provides a communication method, to position the terminal device in the non-connected state. The communication method provided in embodiments of this application may be applied to various communication systems, for example, a long term evolution (long term evolution, LTE) system, a 5th generation (5th generation, 5G) mobile communication system, a wireless fidelity (wireless fidelity, Wi-Fi) system, a future communication system, or a system integrating a plurality of communication systems. This is not limited in embodiments of this application. 5G may also be referred to as new radio (new radio, NR).

The communication method provided in embodiments of this application may be applied to various communication scenarios, for example, may be applied to one or more of the following communication scenarios: enhanced mobile broadband (enhanced mobile broadband, eMBB), ultra reliable low latency communication (ultra reliable low latency communication, URLLC), and machine type communication (machine type communication, MTC), massive machine type communication (massive machine type communication, mMTC), device to device (device to device, D2D), vehicle to everything (vehicle to everything, V2X), vehicle to vehicle (vehicle to vehicle, V2V), the Internet of Things (internet of things, IoT), and the like.

Actions, terms, and the like in embodiments of this application may be mutually referenced. This is not limited. In embodiments of this application, names of messages exchanged between devices, names of parameters in the messages, or the like are merely examples. Another name may alternatively be used during specific implementation. This is not limited.

FIG. 2 is a flowchart of a communication method according to an embodiment of this application. As shown in FIG. 2, the method may include the following steps.

201: A terminal device sends capability information to a location management function LMF device. The LMF device receives the capability information from the terminal device.

The capability information indicates that the terminal device supports sending of a sounding reference signal (Sounding Reference Signal, SRS) in a non-connected state, or the capability information indicates that the terminal device supports uplink positioning in a non-connected state. The uplink positioning of the terminal device means that the terminal device sends the SRS, and a location of the terminal device is determined based on a measurement result that is of the SRS sent by the terminal device and that is measured by a measurement base station. A specific location of the terminal device is positioned.

Specifically, the terminal device sends the capability information to the LMF device through an access network device RAN. The terminal device first sends the capability information to the RAN. Then, the RAN sends the capability information to the LMF device. The RAN may send the capability information to the LMF device through an AMF device.

The capability information may be SRS-nonConnected (SRS-nonConnected) or Non-connected SRS (Non-connected SRS), indicating that the terminal device supports sending of the SRS in the non-connected state. Alternatively, the capability information may be SRS-Inactive (SRS-Inactive) or Inactive-SRS (Inactive-SRS), indicating that the terminal device supports sending of the SRS in an inactive state. Alternatively, the capability information may be SRS-Idle (SRS-Idle) or Idle-SRS (Idle-SRS), indicating that the terminal device supports sending of the SRS in an idle state. A name of the capability information is described above by using an example, but a specific name is not specifically limited in this patent application

Before step 201, the communication method may further include step 202.

202: The LMF device sends a request to the terminal device, where the request is for requesting the terminal device to send the capability information. The terminal device receives the request from the LMF. To distinguish from another request, the request in step 202 may also be referred to as a first request.

It should be noted that the terminal device may actively report a capability, for example, separately perform step 201. Alternatively, the terminal device may report the capability based on a request from a network (for example, the LMF), for example, perform steps 202 and 201.

The first request may be a RequestCapabilities (RequestCapabilities) message. Correspondingly, step 201 may be a Provide Capabilities (Provide Capabilities) message. The capability information may be included in an nr-ul-Provide Capabilities (nr-ul-ProvideCapabilities) information element of the ProvideCapabilities message. Alternatively, the capability information may be included in an nr-UL-SRS-Capability (nr-UL-SRS-Capability) information element.

Before step 201, the communication method may further include step 203.

203: The terminal device determines the capability information of the terminal device. In this embodiment, the terminal device determines that the terminal device supports sending of the SRS in the non-connected state, or the terminal device determines that the terminal device supports uplink positioning in the non-connected state.

Optionally, in step 201, the capability information further includes a method, for performing uplink positioning in the non-connected state, supported by the terminal device. For example, the method, for performing uplink positioning in the non-connected state, supported by the terminal device includes at least one of the following: an uplink-time difference of arrival (uplink-time difference of arrival, UL-TDOA for short) method or an uplink-angle of arrival (uplink-Angle of Arrival, UL-AOA for short) method. Correspondingly, in step 203, the terminal device also determines the method, for performing uplink positioning in the non-connected state, supported by the terminal device In the UL-TDOA positioning method, the location of the terminal device is determined based on uplink-relative time of arrival (uplink-relative time of arrival, UL-RTOA for short) of uplink signals received by a plurality of reception points (reception points, RPs for short) from the terminal devices, or uplink-sounding reference signal-reference signal received power (uplink-sounding reference signal-reference signal received power, UL-SRS-RSRP for short). The reception point may be an access network device. In the UL-AoA positioning method, the location of the terminal device is determined based on angles of arrival of uplink signals received by a plurality of RPs from the terminal devices.

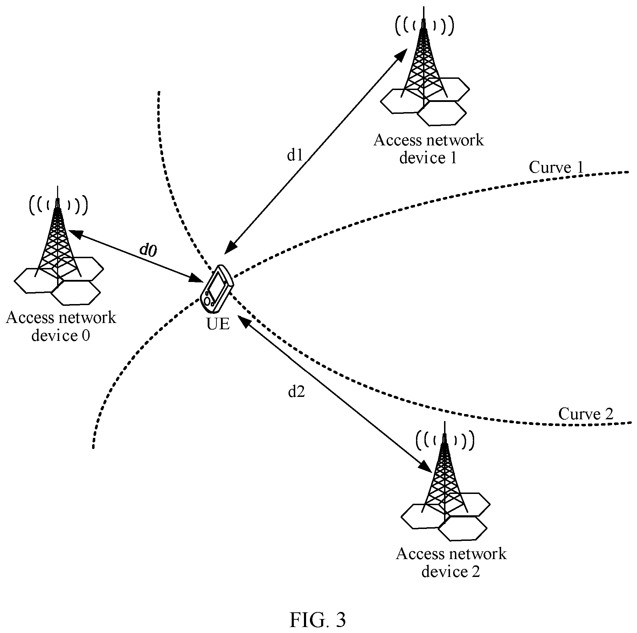

FIG. 3 is a schematic diagram of a UL-TDOA positioning method. As shown in FIG. 3, an access network device (three access network devices are used for description in the figure) measures time of arrival of an SRS signal sent by a terminal device, and may determine a positioning area based on a time difference of arrival, of signals, measured by every two access network devices. For example, a distance difference between the terminal device and an access network device 0 and an access network device 1 is d0-d1, which forms a curve. Similarly, a curve formed by a distance difference between the access network device 0 and an access network device 2 may be determined. An intersection point may be determined by using the two curves, and an exact location of the terminal device may be obtained with reference to additional information (for example, geographical location information of the access network devices). The UL-AOA positioning method is similar to the UL-TDOA positioning method. In the UL-AOA positioning method, a location of the terminal device is determined by measuring, by the access network device, an angle of arrival at which the SRS signal sent by the terminal device arrives at the access network device. FIG. 3 is merely an example of the UL-TDOA positioning method. Specific forms of the UL-TDOA positioning method and the UL-AOA positioning method in this patent application are not limited.

Optionally, in this embodiment, the capability information may be nonConnected-UL-TDOA (nonConnected-UL-TDOA), indicating that the terminal device supports an uplink TDOA positioning method in the non-connected state. Alternatively, the capability information may be Inactive-UL-TDOA (Inactive-UL-TDOA), indicating that the terminal device supports an uplink TDOA positioning method in an inactive state. Alternatively, the capability information may be Idle-UL-TDOA (Idle-UL-TDOA), indicating that the terminal device supports an uplink TDOA positioning method in an idle state. The capability information may be nonConnected-UL-AOA (nonConnected-UL-AOA), indicating that the terminal device supports an uplink AOA positioning method in the non-connected state. Alternatively, the capability information may be Inactive-UL-AOA (Inactive-UL-AOA), indicating that the terminal device supports an uplink AOA positioning method in an inactive state. Alternatively, the capability information may be Idle-UL-AOA (Idle-UL-AOA), indicating that the terminal device supports an uplink AOA positioning method in an idle state.

In the embodiment shown in FIG. 2, the capability information is merely an example, or may have another name, provided that the capability information can indicate that the terminal device supports sending of the SRS in the non-connected state, the terminal device supports uplink positioning in the non-connected state, or the terminal device supports an uplink positioning method in the non-connected state. The capability information may have another form of structure.

In the solution shown in FIG. 2, the LMF device may learn that the terminal device supports sending of the SRS in the non-connected state, or the terminal device supports uplink positioning in the non-connected state, so that positioning in the non-connected state may be configured for the terminal device. This avoids a positioning failure caused by performing uplink positioning on the terminal device when the terminal device does not support sending of the SRS in the non-connected state or uplink positioning in the non-connected state.

Further, the LMF device learns that the terminal device supports sending of the SRS in the non-connected state, or the terminal device supports uplink positioning in the non-connected state, so that the terminal device does not need to be paged to a connected state each time during positioning. This can avoid a delay and signaling overheads caused by paging the terminal device to the connected state, and reduce energy consumption. The solution shown in FIG. 2 makes it possible to position the terminal device in the non-connected state more quickly.

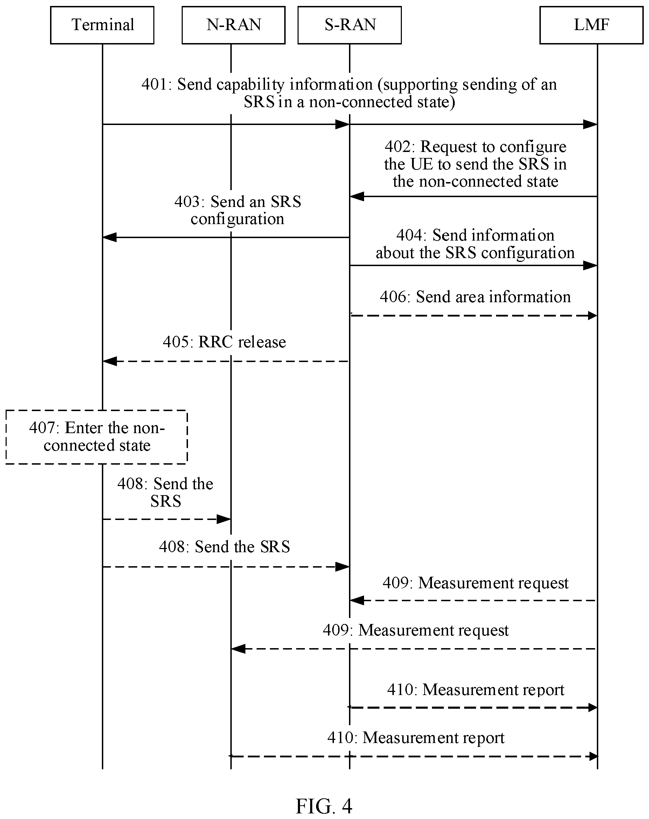

FIG. 4 is a flowchart of a communication method according to an embodiment of this application. As shown in FIG. 4, the method may include the following steps.

401: A terminal device sends capability information to a location management function LMF device. The capability information indicates that the terminal device supports sending of an SRS in a non-connected state, or supports uplink positioning in a non-connected state. For detailed descriptions of step 401, refer to step 201.

402: The LMF device sends a request to an access network RAN device, to request to configure the terminal device to send the SRS. The access network device receives the request. The request may be a positioning information request (Positioning Information Request).

Requesting to configure the terminal device to send the SRS includes: requesting to configure the terminal device to send the SRS in the non-connected state. Correspondingly, the request may include information indicating to request to configure the terminal device to send the SRS in the non-connected state. For example, the information may be SRS-nonConnected (SRS-nonConnected), indicating to request to configure the terminal device to send the SRS in the non-connected state. Alternatively, the information may be SRS-Inactive (SRS-Inactive), indicating to request to configure the terminal device to send the SRS in an inactive state. Alternatively, the information may be SRS-Idle (SRS-Idle), indicating to request to configure the terminal device to send the SRS in an idle state. Certainly, a name of the information is not limited. The RAN device only needs to learn that the LMF requests to configure the terminal device to send the SRS in the non-connected state.

In another example, the request in step 402 may include information indicating that the terminal device supports sending of the SRS in the non-connected state, or information indicating that the terminal device supports uplink positioning in the non-connected state. For example, the information may be SRS-nonConnected (SRS-nonConnected), indicating that the terminal device supports sending of the SRS in the non-connected state. Alternatively, the information may be SRS-Inactive (SRS-Inactive), indicating that the terminal device supports sending of the SRS in an inactive state. Alternatively, the information may be SRS-Idle (SRS-Idle), indicating that the terminal device supports sending of the SRS in an idle state. Certainly, a name of the information is not limited. The RAN device only needs to learn that the terminal device supports sending of the SRS in the non-connected state.

To distinguish from another request, the request in step 402 may be referred to as a second request.

403: The RAN device sends information about an SRS configuration to the terminal device. The information about the SRS configuration indicates the terminal device to send the SRS based on the SRS configuration. The terminal device receives the information about the SRS configuration

The information about the SRS configuration indicates the terminal device to send the SRS in the non-connected state based on the SRS configuration. Alternatively, the RAN device sends, to the terminal device, information indicating the terminal device to send the SRS in the non-connected state based on the SRS configuration. Optionally, the information indicating the terminal device to send the SRS in the non-connected state based on the SRS configuration may be sent in a form of indication information in step 403. The RAN device sends the information about the SRS configuration via an RRC release message. This may also indicate the terminal device to send the SRS in the non-connected state.

The information about the SRS configuration includes at least one of the following: SRS periodicity information, SRS resource information, SRS frequency information, or SRS bandwidth information. The SRS periodicity information indicates a periodicity for sending the SRS. The SRS frequency information indicates a frequency for sending the SRS. The SRS resource information indicates a resource for sending the SRS. Certainly, the SRS may not be sent periodically.

404: The RAN device sends the information about the SRS configuration to the LMF device. The LMF device receives the information about the SRS configuration. In an embodiment, the RAN device may send the information about the SRS configuration to the LMF device via a response message. The response message is a response to the request in step 402. The response may be a positioning information response (Positioning Information Response).

405: The RAN device sends the RRC release message to the terminal device. The terminal device receives the RRC release message.

A person skilled in the art should understand that, when the terminal device is not indicated to send the SRS in the non-connected state based on the SRS configuration in 403, a corresponding indication may be made in step 405. For example, the RRC release message includes the information about the SRS configuration. The information about the SRS configuration in the RRC release message may indicate the terminal device to send the SRS when entering the non-connected state. For another example, the RRC release message includes indication information, and the indication information indicates the terminal to continue to send the SRS when entering the non-connected state, or continue to send the SRS based on the SRS configuration sent to the terminal device in step 403.

406: The RAN device sends area information to the LMF device. The LMF device receives the area information from the RAN device.

The area information is information about at least one access network device. The information about at least one access network device is an access network device list, and the information about the access network device may indicate an area covered by the access network device. After obtaining the area information, the LMF device may select an access network device in the area to perform measurement. In this way, even if the terminal device moves, the LMF device can accurately select an access network device that can measure the SRS sent by the terminal device, to obtain a result of measuring the SRS of the terminal device by the access network device and determine a location of the terminal device. In an example, the area information may be an access network device in a RAN notification area (notification Area). The RAN notification area defines a specific access network device area, which may be represented by the cell list or access network device area codes (RAN area codes). When moving in the area, the terminal device may remain in the inactive state, and does not need to initiate access to the access network device. When moving beyond the area, the terminal device initiates access to the access network device on which the terminal device camps to update the RAN notification area. After the update is completed, if there is no service, the terminal device may continue to enter the inactive state. In another example, the area information may be an area identifier (area ID), or a position area identifier (position area ID). The access network device further sends the area information to the terminal device. Therefore, after finding that the terminal device moves out of the area, the terminal device initiates random access and enters the connected state, so that the access network device and/or the core network device learn/learns of an area in which the terminal device is located. This avoids a positioning failure caused by a failure to measure the SRS of the terminal device when the terminal device moves out of the area.

Optionally, the RAN device may further send, to the LMF device, information for notifying the LMF device that the terminal device enters the non-connected state. The information may be sent separately, or may be combined with step 407.

The RAN device in the foregoing steps 401 to 406 may be a serving access network (serving RAN, S-RAN for short) device. It should be noted that, after step 401, if the terminal device moves, the serving access network device may change. However, the access network device in steps 401 to 406 is the access network devices serving the terminal device when the steps are performed.

407: The terminal device enters the non-connected state. Optionally, the method may further include the following step.

408: The terminal device sends the SRS. The terminal device may send the SRS based on the information about the SRS configuration in step 403 or 405.

The SRS sent by the terminal device is received by the S-RAN device and/or a neighboring access network device (neighboring RAN, N-RAN for short). In other words, the S-RAN device and/or the neighboring access network device receives the SRS from the terminal device.

It should be noted that the neighboring access network device in this patent application may be one or more neighboring access network devices.

409: The LMF device sends a measurement request to the S-RAN device and/or the N-RAN device. The measurement request includes a to-be-measured measurement quantity (measurement quantities) and a configuration of a to-be-measured SRS. The S-RAN device and/or the N-RAN perform/performs corresponding measurement after receiving the measurement request.

When the terminal device enters the non-connected state, the LMF device may not select the measurement RAN device based on a cell in which the terminal device is located. Instead, the LMF device selects, in another manner, the RAN device that measures the SRS sent by the terminal device. For example, a RAN device in a corresponding area is selected based on a result obtained through last positioning or a plurality times of positioning performed on the terminal device, namely, a location of the terminal device obtained through last positioning or a plurality times of positioning.

Optionally, when the LMF device receives the area information, the LMF device may send the measurement request to the RAN device in the area indicated by the area information. Therefore, after the UE moves in the non-connected state, the LMF may still select the access network device that can measure the SRS sent by the UE, to obtain the result obtained by the access network device by measuring the SRS of the UE and determine the location of the UE.

Optionally, the method may further include the following step.

410: The S-RAN device and/or the N-RAN device send/sends a measurement report to the LMF device. The LMF device receives the measurement report. The measurement report includes a measurement result of a measurement quantity obtained through measurement according to the configuration of the SRS.

In this patent application, it is not strictly required that all steps be performed in a sequence of numbers. A person skilled in the art may adjust a sequence of steps according to an actual situation. For example, there is no specific requirement on a sequence of steps 403 and 404. Step 403 may be performed before step 404, or step 404 may be performed before step 403, or steps 403 and 404 may be performed simultaneously. Some steps may also be combined, for example, steps 403 and 405 may be combined. To be specific, the RAN device sends the RRC release message to the terminal device, where the RRC release message includes the information about the SRS configuration. For example, after receiving a request for requesting to configure the terminal device to send the SRS, the RAN device sends the RRC release message to the terminal device, where the RRC release message includes the information about the SRS configuration. The information about the SRS configuration in the RRC release message may indicate the terminal device to send the SRS when entering the non-connected state.

In some embodiments, step 401 may not be performed. Instead, step 402 is directly performed. For example, the LMF device already learns of the capability information of the terminal device. Alternatively, the LMF device considers by default that the terminal device has a capability of supporting sending of the SRS in the non-connected state.

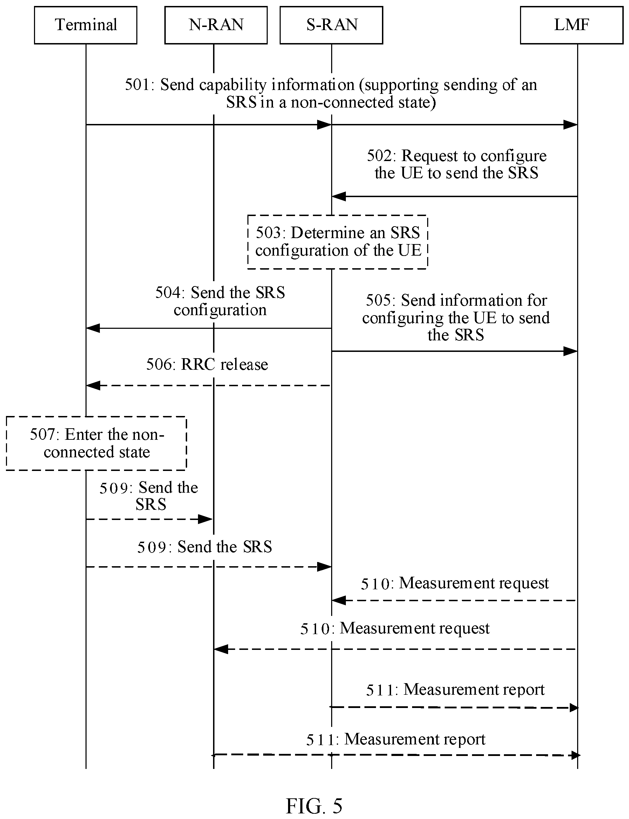

FIG. 5 is a flowchart of a communication method according to an embodiment of this application. As shown in FIG. 5, the method may include the following steps.

501: A terminal device sends capability information to a location management function LMF device. The capability information indicates that the terminal device supports uplink positioning in a non-connected state. For detailed descriptions of step 501, refer to step 201.

502: The LMF device sends a request to an access network RAN device, to request to configure the terminal device to send an SRS. The access network device receives the request. The request may be a positioning information request (positioning information request).

The request in step 502 may include information indicating that the terminal device supports sending of the SRS in the non-connected state, or information indicating that the terminal device supports uplink positioning in the non-connected state.

In some embodiments, step 501 may not be performed. Instead, step 502 is directly performed.

503: The RAN device determines information about an SRS configuration of the terminal device.

504: The RAN device sends the information about the SRS configuration to the terminal device. The information about the SRS configuration indicates the terminal device to send the SRS based on the SRS configuration.

505: The RAN device sends the information about the SRS configuration to the LMF device. The LMF device receives the information about the SRS configuration. In an example, the RAN device may send the information about the SRS configuration to the LMF device via a positioning information response (positioning information response).

506: The RAN device sends an RRC release message to the terminal device. The terminal device receives the RRC release message. Before the RAN device sends the RRC release message to the terminal device, the RAN device determines to release the terminal device to the non-connected state.

Optionally, the RAN device may further determine to perform configuration for the terminal device, to configure the terminal device to send the SRS in the non-connected state. For example, the RRC release message may include indication information, to indicate the terminal device to send the SRS in the non-connected state based on the SRS configuration in step 504. Alternatively, the RRC release message may include the information about the SRS configuration, to indicate the terminal device to send the SRS in the non-connected state based on the SRS configuration in step 506.

The RAN device in the foregoing steps 501 to 506 may be a service access network (s-RAN) device.

507: The terminal device enters the non-connected state.

508: The RAN device sends, to the LMF device, a message for notifying the LMF device that the terminal device enters the non-connected state. The LMF device receives the message from the RAN device.

The message in step 508 may be a positioning information update (positioning information update). Optionally, the RAN device may send area information in step 508. For the area information, refer to descriptions in step 406. Optionally, step 508 may not include a message for notifying the LMF device that the terminal device enters the non-connected state, but includes the area information. The LMF device may be implicitly notified, via the area information, that the terminal device enters the non-connected state.

In some embodiments, step 503 may be performed after step 504 and before step 506.

In some embodiments, steps 506 and 504 may be combined. To be specific, the SRS configuration is sent to the terminal device in the RRC release message. Step 504 is not performed separately. In this case, steps 508 and 505 may also be combined. To be specific, step 508 is not performed. Instead, the SRS configuration and the indication information in step 508 are sent in step 505. For example, the information about the SRS configuration may be sent in a positioning information response, and the LMF device is notified that the terminal device enters the non-connected state and/or an area.

509: The terminal device sends the SRS. An S-RAN device and/or an N-RAN device receive/receives the SRS. For details, refer to step 408.

510: The LMF device sends a measurement request to an S-RAN device and/or an N-RAN device. For details, refer to step 409.

511: The S-RAN device and/or the N-RAN device send/sends a measurement report to the LMF device. For details, refer to step 410.

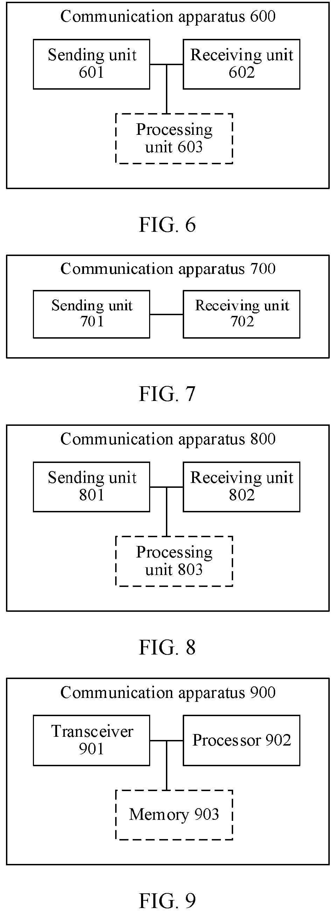

The foregoing mainly describes the solutions provided in embodiments of this application from a perspective of interaction between network elements. Correspondingly, an embodiment of this application further provides a communication apparatus, and the communication apparatus is configured to implement the foregoing methods. FIG. 6 is a schematic diagram of a structure of a communication apparatus 600. The communication apparatus 600 may perform steps performed by the communication apparatus in the embodiments shown in FIG. 2, FIG. 4, and FIG. 5. The communication apparatus 600 includes a sending unit 601 and a receiving unit 602. Optionally, the communication apparatus 600 may further include the processing unit 603. The sending unit 601 may perform sending steps performed by the communication apparatus in the embodiments shown in FIG. 2, FIG. 4, or FIG. 5. The receiving unit 602 may perform a receiving step performed by the communication apparatus in the embodiments shown in FIG. 2, FIG. 4, or FIG. 5. The processing unit 603 may perform internal processing steps performed by the communication apparatus in the embodiments shown in FIG. 2, FIG. 4, or FIG. 5.

In a first embodiment, the sending unit 601 may perform step 201. The sending unit 601 is configured to send capability information to a location management function LMF device, where the capability information indicates that the terminal device supports sending of a sounding reference signal SRS in a non-connected state. The receiving unit 602 may perform step 202. The processing unit 603 may perform step 203. The processing unit 603 may be configured to determine the capability information of the communication apparatus.

In a second embodiment, the sending unit 601 may perform step 401. The receiving unit 602 may perform step 403. To be specific, the receiving unit 602 is configured to receive information about an SRS configuration from an access network device, where the information about the SRS configuration indicates the terminal device to send an SRS based on the SRS configuration.

Optionally, the receiving unit 602 is further configured to perform step 405. The sending unit 601 is further configured to perform step 408. The processing unit is further configured to perform step 407. To be specific, the processing unit is further configured to determine to enter a non-connected state.

In a third embodiment, the sending unit 601 may perform step 501. The receiving unit 602 may perform step 504. Optionally, the receiving unit 602 is further configured to perform step 506. The sending unit is further configured to perform step 508. The processing unit is further configured to perform step 507.

The communication apparatus 600 may be a terminal device, a chip in the terminal device, or a system on chip in the terminal device.

FIG. 7 is a schematic diagram of a structure of a communication apparatus 700. The communication apparatus 700 may perform steps performed by the communication apparatus in the embodiments shown in FIG. 2, FIG. 4, and FIG. 5. The communication apparatus 700 includes a sending unit 701 and a receiving unit 702.

In a first embodiment, the receiving unit 702 may perform step 201. The receiving unit 702 may receive capability information from a terminal device, where the capability information indicates that the terminal device supports sending of a sounding reference signal SRS in a non-connected state. The sending unit 701 may perform step 202.

In a second embodiment, the receiving unit 702 may perform step 401. The sending unit 701 may perform step 402. For example, the sending unit 701 is configured to send a request to an access network device, to request to configure the terminal device to send the SRS.

Optionally, the receiving unit 702 is further configured to perform step 404. For example, the receiving unit 702 is configured to receive information about an SRS configuration from the RAN device. The receiving unit 702 is further configured to perform step 406. For example, the receiving unit 702 is further configured to receive area information from the RAN device.

Optionally, the sending unit 701 is further configured to perform step 409. For example, the sending unit 701 is further configured to send a measurement request to an S-RAN device and an N-RAN device. The receiving unit 702 is further configured to perform step 410. For example, the receiving unit 702 is further configured to receive a measurement report.

In a third embodiment, the receiving unit 702 may perform step 501. The sending unit 701 may perform step 502. Optionally, the receiving unit 702 is further configured to perform step 505. The sending unit 701 is further configured to perform step 509. The receiving unit 702 is further configured to perform step 510.

The communication apparatus 700 may be a core network device, for example, an LMF device; or may be a chip, a system on chip, or a circuit in the core network device.

FIG. 8 is a schematic diagram of a structure of a communication apparatus 800. The communication apparatus 800 may perform steps performed by the communication apparatus in the embodiments shown in FIG. 2, FIG. 4, and FIG. 5. The communication apparatus 800 includes a sending unit 801 and a receiving unit 802. Optionally, the communication apparatus 800 may further include a processing unit 803. The sending unit 801 may perform sending steps performed by the communication apparatus in the embodiments shown in FIG. 2, FIG. 4, or FIG. 5. The receiving unit 802 may perform a receiving step performed by the communication apparatus in the embodiments shown in FIG. 2, FIG. 4, or FIG. 5. The processing unit 803 may perform internal processing steps performed by the communication apparatus in the embodiments shown in FIG. 5.

In a first embodiment, the receiving unit 802 may receive capability information from a terminal device. The sending unit 801 may send the capability information to a location management function LMF device, where the capability information indicates that the terminal device supports sending of a sounding reference signal SRS in a non-connected state. The receiving unit 802 may receive a request from the LMF device, to request the capability information. The sending unit 801 may send the request to the terminal device.

In a second embodiment, the receiving unit 802 may perform steps 402, 408, and 409. The sending unit 801 may perform steps 403 to 406 and 410.

In a third embodiment, the receiving unit 802 may perform steps 502, 508, and 509. The sending unit is further configured to perform steps 504 to 506 and 510. The processing unit is further configured to perform step 503.

The communication apparatus 800 may be an access network device, or a chip, a system on chip, or a circuit in the access network device.

Optionally, in the foregoing embodiments, the sending unit may be implemented through a transmitter and a sending circuit, and the receiving unit may be implemented through a receiver and a receiving circuit. The processing unit may be implemented through a processor, a controller, a dedicated processing chip, a general-purpose chip, or a processing circuit. The sending unit and the receiving unit may be a same physical entity or different physical entities. When the sending unit and the receiving unit are a same physical entity, the sending unit and the receiving unit may be collectively referred to as a transceiver.

When the communication apparatuses 600 to 800 are each a chip, the chip includes a transceiver circuit and a processing circuit. The transceiver circuit may be an input/output circuit or a communication interface. The processing circuit may be a processor, a microprocessor, or an integrated circuit integrated on the chip. The input circuit may be an input pin. The output circuit may be an output pin. The processing circuit may be a transistor, a gate circuit, a trigger, any logic circuit, or the like. An input signal received by the input circuit may be received and input by, for example, but not limited to, a receiver. A signal output by the output circuit may be output to, for example, but not limited to, a transmitter and transmitted by the transmitter. In addition, the input circuit and the output circuit may be different circuits, or may be a same circuit. In this case, the circuit is used as the input circuit and the output circuit at different moments.

FIG. 9 is a schematic diagram of a structure of a communication apparatus 900. The communication apparatus 900 includes a transceiver 901 and a processor 902. The processor 902 and the transceiver 901 are configured to support the communication apparatus in performing the communication methods performed by the terminal device, the RAN device, or the LMF device in the embodiments shown in FIG. 2, FIG. 4, and FIG. 5.

Optionally, the processor 902 may control the transceiver 901 to perform the receiving and sending steps performed by the terminal device in the embodiments shown in FIG. 2, FIG. 4, and FIG. 5. For example, the transceiver 901 is configured to perform steps 201 and 202, steps 401, 403, 405, and 408, or steps 501, 504, 506, and 508. The processor 902 is configured to perform processing steps performed by the terminal device in the embodiments shown in FIG. 2, FIG. 4, or FIG. 5. For example, the processor 902 is configured to perform steps 203, 407, and 507. The communication apparatus may be a terminal device, or a component, for example, a chip or a system on chip, in the terminal device.

Optionally, the processor 902 may control the transceiver 901 to perform the receiving and sending steps performed by the LMF device in the embodiments shown in FIG. 2, FIG. 4, and FIG. 5. For example, the transceiver 901 is configured to perform steps 201 and 202, steps 401, 402, 404, 406, 409, and 410, or steps 501, 502, 505, 509, and 510. The communication apparatus may be an LMF device, or a component, for example, a chip or a system on chip, in the LMF device.

Optionally, the processor 902 may control the transceiver 901 to perform the receiving and sending steps performed by the RAN device in the embodiments shown in FIG. 2, FIG. 4, and FIG. 5. For example, the transceiver 901 is configured to perform steps 201 and 202, steps 401 to 406 and 408 to 410, or steps 501 and 502, 504 to 506, and 508 to 510. The processor 902 may further perform step 503. The communication apparatus may be a RAN device, or a component, for example, a chip or a system on chip, in the RAN device.

The communication apparatus 900 may further include a memory 903, configured to store instructions. The instructions may be a computer program. The processor 902 may read the instructions to perform corresponding processing.

The memory 903 may be a volatile memory or a nonvolatile memory, or may include the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that the memory 903 may exist independently of the processor 902, or may be integrated with the processor 902. The memory 903 may be configured to store instructions, program code, some data, or the like. Optionally, the memory 903 may alternatively be located outside the communication apparatus 900. When executing the instructions stored in the memory 903, the processor 902 may implement the method provided in embodiments of this application.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor, or the like.

It should be noted that, in the specification, claims, and accompanying drawings of this application, terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it is not considered that the implementation goes beyond the scope of this application. A person skilled in the art may clearly understand that, for the purpose of convenient and brief description, for detailed working processes of the foregoing system, apparatus, and unit, refer to corresponding processes in the foregoing method embodiments. Details are not described herein again. In the several embodiments provided in this application, it should be understood that the disclosed system, apparatus, and method may be implemented in another manner. For example, the described apparatus embodiment is merely an example. For example, the unit division is merely logical function division and may be other division during actual implementation. For example, a plurality of units or components may be combined or integrated into another system, or some features may be ignored. Alternatively, the units described as separate parts may or may not be physically separated, and parts displayed as units may or may not be physical units, may be located in one place, or may be distributed on a plurality of network units. Some or all of the units may be selected based on an actual requirement to achieve the objectives of the solutions of embodiments. In addition, functional units in embodiments of this application may be integrated into one processing unit, or each of the units may exist alone physically, or two or more units are integrated into one unit. When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk drive, a read-only memory, a random access memory, a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A communication method, wherein the method comprises:
sending (201, 401, 501), by a terminal device, capability information to a location management function, LMF, device, wherein the capability information indicates that the terminal device supports sending of a sounding reference signal, SRS, in a non-connected state;
receiving (403, 405, 504), by the terminal device, information about an SRS configuration from an access network device, wherein the information about the SRS configuration indicates the terminal device to send the SRS in the non-connected state based on the SRS configuration, wherein the information about the SRS configuration is received (403, 405) via a radio resource control, RRC, release message ;
receiving, by the terminal device, area information from the access network device, the area information indicating a specific area and being information about at least one access network device, wherein the information about at least one access network device is an access network device list;
entering (407), by the terminal device, the non-connected state; and
after finding that the terminal device moves out of the area, initiating, by the terminal device, random access and entering, by the terminal device, the connected state.

2. The communication method according to claim 1, wherein the method further comprises:
receiving (202), by the terminal device, a first request from the LMF device, wherein the first request is for requesting the terminal device to send the capability information.

3. The communication method according to claim 1 or 2, wherein the non-connected state comprises an idle state and/or an inactive state.

4. The communication method according to any one of claims 1 to 3, wherein the method further comprises: receiving (405, 506), by the terminal device from the access network device, information indicating the terminal device to send the SRS in the non-connected state based on the SRS configuration.

5. The communication method according to any one of claims 1 to 4, wherein the SRS configuration comprises at least one of the following: an SRS sending periodicity, an SRS resource indicator, or a quantity of SRS symbols.

6. The communication method according to any one of claims 1 to 5, wherein the capability information comprises a method, for performing positioning in the non-connected state, supported by the terminal device.

7. A communication method, wherein the method comprises:
receiving (201, 401, 501), by a location management function, LMF, device, capability information from a terminal device, wherein the capability information indicates that the terminal device supports sending of a sounding reference signal, SRS, in a non-connected state;
sending (402, 502), by the LMF device to an access network device, a message for requesting the access network device to configure the terminal device to send the SRS;
sending, by the access network device to the terminal device, information about SRS configuration via a radio resource control, RRC, release message;
receiving (404), by the LMF device, information about the SRS configuration from the access network device;
receiving (406), by the LMF device, area information from the access network device, the area information indicating a specific area and being information about at least one access network device, wherein the information about at least one access network device is an access network device list; after obtaining the area information, selecting, by the LMF device in the specific area, a second access network device for measuring the SRS sent by the terminal device; and
sending (409), by the LMF device, a measurement request to the second access network device.

8. The communication method according to claim 7, wherein the message for requesting the access network device to configure the terminal device to send the SRS comprises information for requesting the access network device to configure the terminal device to send the SRS in the non-connected state.

9. The communication method according to claim 7, wherein the method further comprises: sending (402, 502), by the LMF device to the access network device, information indicating that the terminal device supports sending of the SRS in the non-connected state.

10. The communication method according to any one of claims 7 to 9, wherein the method further comprises:
receiving (404, 505), by the LMF device from the access network device, information indicating that the terminal device enters the non-connected state.

11. A terminal device (600) configured to perform the method according to any one of claims 1 to 6.

12. A system comprising a location management function, LMF, device (700) and an access network device (800), wherein the system is configured to perform the method according to any one of claims 7 to 10.

## Patentansprüche

1. Kommunikationsverfahren, wobei das Verfahren Folgendes umfasst:
Senden (201, 401, 501), durch ein Endgerät, einer Fähigkeitsinformation an ein Standortverwaltungsfunktionsgerät, LMF-Gerät, wobei die Fähigkeitsinformation angibt, dass das Endgerät ein Senden eines "Sounding"-Referenzsignals, SRS, in einem nicht verbundenen Zustand unterstützt;
Empfangen (403, 405, 504), durch das Endgerät, einer Information über eine SRS-Konfiguration von einem Zugangsnetzwerkgerät, wobei die Information über die SRS-Konfiguration dem Endgerät angibt, das SRS im nicht verbundenen Zustand basierend auf der SRS-Konfiguration zu senden, wobei die Information über die SRS-Konfiguration über eine Funkressourcensteuerungsfreigabenachricht, RRC-Freigabenachricht, empfangen (403, 405) wird;
Empfangen, durch das Endgerät, einer Bereichsinformation vom Zugangsnetzwerkgerät,
wobei die Bereichsinformation einen spezifischen Bereich angibt und eine Information über mindestens ein Zugangsnetzwerkgerät ist, wobei die Information über mindestens ein Zugangsnetzwerkgerät eine Zugangsnetzwerkgeräteliste ist;
Wechseln (407), durch das Endgerät, in den nicht verbundenen Zustand und
nach einem Feststellen, dass sich das Endgerät aus dem Bereich heraus bewegt, Initiieren, durch das Endgerät, eines wahlfreien Zugriffs und Wechseln, durch das Endgerät, in den verbundenen Zustand.

2. Kommunikationsverfahren nach Anspruch 1, wobei das Verfahren ferner Folgendes umfasst:
Empfangen (202), durch das Endgerät, einer ersten Anforderung vom LMF-Gerät, wobei die erste Anforderung darin besteht, das Endgerät zum Senden der Fähigkeitsinformation aufzufordern.

3. Kommunikationsverfahren nach Anspruch 1 oder 2, wobei der nicht verbundene Zustand einen Ruhezustand und/oder einen inaktiven Zustand umfasst.

4. Kommunikationsverfahren nach einem der Ansprüche 1 bis 3, wobei das Verfahren ferner Folgendes umfasst:
Empfangen (405, 506), durch das Endgerät vom Zugangsnetzwerkgerät, einer Information, die dem Endgerät angibt, das SRS im nicht verbundenen Zustand basierend auf der SRS-Konfiguration zu senden.

5. Kommunikationsverfahren nach einem der Ansprüche 1 bis 4, wobei die SRS-Konfiguration eine SRS-Sendeperiodizität und/oder einen SRS-Ressourcenindikator und/oder eine Menge von SRS-Symbolen umfasst.

6. Kommunikationsverfahren nach einem der Ansprüche 1 bis 5, wobei die Fähigkeitsinformation ein Verfahren zum Durchführen eines Positionierens im nicht verbundenen Zustand, das durch das Endgerät unterstützt wird, umfasst.

7. Kommunikationsverfahren, wobei das Verfahren Folgendes umfasst:
Empfangen (201, 401, 501), durch ein Standortverwaltungsfunktionsgerät, LMF-Gerät, einer Fähigkeitsinformation von einem Endgerät, wobei die Fähigkeitsinformation angibt, dass das Endgerät ein Senden eines "Sounding"-Referenzsignals, SRS, in einem nicht verbundenen Zustand unterstützt;
Senden (402, 502), durch das LMF-Gerät an ein Zugangsnetzwerkgerät, einer Nachricht zum Auffordern des Zugangsnetzwerkgeräts zum Konfigurieren des Endgeräts zum Senden des SRS;
Senden, durch das Zugangsnetzwerkgerät an das Endgerät, einer Information über eine SRS-Konfiguration über eine Funkressourcensteuerungsfreigabenachricht, RRC-Freigabenachricht;
Empfangen (404), durch das LMF-Gerät, einer Information über die SRS-Konfiguration vom Zugangsnetzwerkgerät;
Empfangen (406), durch das LMF-Gerät, einer Bereichsinformation vom Zugangsnetzwerkgerät, wobei die Bereichsinformation einen spezifischen Bereich angibt und eine Information über mindestens ein Zugangsnetzwerkgerät ist, wobei die Information über mindestens ein Zugangsnetzwerkgerät eine Zugangsnetzwerkgerätelist ist; nach einem Erhalten der Bereichsinformation, Auswählen, durch das LMF-Gerät im spezifischen Bereich, eines zweiten Zugangsnetzwerkgeräts zum Messen des durch das Endgerät gesendeten SRS und
Senden (409), durch das LMF-Gerät, einer Messanforderung an das zweite Zugangsnetzwerkgerät.

8. Kommunikationsverfahren nach Anspruch 7, wobei die Nachricht zum Auffordern des Zugangsnetzwerkgeräts zum Konfigurieren des Endgeräts zum Senden des SRS eine Information zum Auffordern des Zugangsnetzwerkgeräts zum Konfigurieren des Endgeräts zum Senden des SRS im nicht verbundenen Zustand umfasst.

9. Kommunikationsverfahren nach Anspruch 7, wobei das Verfahren ferner Folgendes umfasst: Senden (402, 502), durch das LMF-Gerät an das Zugangsnetzwerkgerät, einer Information, die angibt, dass das Endgerät ein Senden des SRS im nicht verbundenen Zustand unterstützt.

10. Kommunikationsverfahren nach einem der Ansprüche 7 bis 9, wobei das Verfahren ferner Folgendes umfasst:
Empfangen (404, 505), durch das LMF-Gerät vom Zugangsnetzwerkgerät, einer Information, die angibt, dass das Endgerät in den nicht verbundenen Zustand wechselt.

11. Endgerät (600), das zum Durchführen des Verfahrens nach einem der Ansprüche 1 bis 6 ausgelegt ist.

12. System, das ein Standortverwaltungsfunktionsgerät, LMF-Gerät, (700) und ein Zugangsnetzwerkgerät (800) umfasst, wobei das System zum Durchführen des Verfahrens nach einem der Ansprüche 7 bis 10 ausgelegt ist.

## Revendications

1. Procédé de communication, dans lequel le procédé comprend :
l'envoi (201, 401, 501), par un dispositif terminal, d'informations de capacité à un dispositif de fonction de gestion de localisation, « Location Management Function », LMF, dans lequel les informations de capacité indiquent que le dispositif terminal prend en charge l'envoi d'un signal de référence de sondage, « Sounding Reference Signal », SRS, dans un état non connecté ;
la réception (403, 405, 504), par le dispositif terminal, d'informations concernant une configuration SRS, en provenance d'un dispositif de réseau d'accès, dans lequel les informations concernant la configuration SRS indiquent au dispositif terminal d'envoyer le SRS dans l'état non connecté sur la base de la configuration SRS, dans lequel les informations concernant la configuration SRS sont reçues (403, 405) par l'intermédiaire d'un message de libération de commande de ressources radio, « Radio Resource Control », RRC ;
la réception, par le dispositif terminal, d'informations de zone en provenance du dispositif de réseau d'accès, les informations de zone indiquant une zone spécifique et étant des informations concernant au moins un dispositif de réseau d'accès, dans lequel les informations concernant au moins un dispositif de réseau d'accès sont composées d'une liste de dispositifs de réseau d'accès ;
l'entrée (407), par le dispositif terminal, dans l'état non connecté ; et
après la découverte que le dispositif terminal se déplace en dehors de la zone, l'initialisation, par le dispositif terminal, d'un accès aléatoire, et l'entrée, par le dispositif terminal, dans l'état connecté.

2. Procédé de communication selon la revendication 1, dans lequel le procédé comprend en outre :
la réception (202), par le dispositif terminal, d'une première demande, en provenance du dispositif LMF, dans lequel la première demande est pour demander au dispositif terminal d'envoyer les informations de capacité.

3. Procédé de communication selon la revendication 1 ou 2, dans lequel l'état non connecté comprend un état inoccupé et/ou un état inactif.

4. Procédé de communication selon l'une quelconque des revendications 1 à 3, dans lequel le procédé comprend en outre : la réception (405, 506), par le dispositif terminal, en provenance du dispositif de réseau d'accès, d'informations indiquant au dispositif terminal d'envoyer le SRS dans l'état non connecté sur la base de la configuration SRS.

5. Procédé de communication selon l'une quelconque des revendications 1 à 4, dans lequel la configuration SRS comprend au moins un élément parmi ce qui suit : une périodicité d'envoi SRS, un indicateur de ressource SRS, ou une quantité de symboles SRS.

6. Procédé de communication selon l'une quelconque des revendications 1 à 5, dans lequel les informations de capacité comprennent un procédé, pour réaliser un positionnement dans l'état non connecté, pris en charge par le dispositif terminal.

7. Procédé de communication, dans lequel le procédé comprend :
la réception (201, 401, 501), par un dispositif de fonction de gestion de localisation, « Location Management Function », LMF, d'informations de capacité en provenance d'un dispositif terminal, dans lequel les informations de capacité indiquent que le dispositif terminal prend en charge l'envoi d'un signal de référence de sondage, « Sounding Reference Signal », SRS, dans un état non connecté ;
l'envoi (402, 502), par le dispositif LMF, à un dispositif de réseau d'accès, d'un message pour demander au dispositif de réseau d'accès de configurer le dispositif terminal pour envoyer le SRS ;
l'envoi, par le dispositif de réseau d'accès, au dispositif terminal, d'informations concernant une configuration SRS, par l'intermédiaire d'un message de libération de commande de ressources radio, « Radio Resource Control », RRC ;
la réception (404), par le dispositif LMF, d'informations concernant la configuration SRS, en provenance du dispositif de réseau d'accès ;
la réception (406), par le dispositif LMF, d'informations de zone, en provenance du dispositif de réseau d'accès, les informations de zone indiquant une zone spécifique et étant des informations concernant au moins un dispositif de réseau d'accès, dans lequel les informations concernant au moins un dispositif de réseau d'accès sont composées d'une liste de dispositifs de réseau d'accès ; après l'obtention des informations de zone, la sélection, par le dispositif LMF dans la zone spécifique, d'un second dispositif de réseau d'accès pour mesurer le SRS envoyé par le dispositif terminal ; et
l'envoi (409), par le dispositif LMF, d'une demande de mesure au second dispositif de réseau d'accès.

8. Procédé de communication selon la revendication 7, dans lequel le message pour demander au dispositif de réseau d'accès de configurer le dispositif terminal pour envoyer le SRS comprend des informations pour demander au dispositif de réseau d'accès de configurer le dispositif terminal pour envoyer le SRS dans l'état non connecté.

9. Procédé de communication selon la revendication 7, dans lequel le procédé comprend en outre : l'envoi (402, 502), par le dispositif LMF, au dispositif de réseau d'accès, d'informations indiquant que le dispositif terminal prend en charge l'envoi du SRS dans l'état non connecté.

10. Procédé de communication selon l'une quelconque des revendications 7 à 9, dans lequel le procédé comprend en outre :
la réception (404, 505), par le dispositif LMF, en provenance du dispositif de réseau d'accès, d'informations indiquant que le dispositif terminal entre dans l'état non connecté.

11. Dispositif terminal (600), configuré pour réaliser le procédé selon l'une quelconque des revendications 1 à 6.

12. Système, comprenant un dispositif de fonction de gestion de localisation, « Location Management Function », LMF, (700), et un dispositif de réseau d'accès (800), dans lequel le système est configuré pour réaliser le procédé selon l'une quelconque des revendications 7 à 10.
